# EUROPEAN PATENT APPLICATION

(11) **EP 4 730 270 A1**
(43) Date of publication of application: **22.04.2026**
(21) Application number: 25206671.7
(22) Date of filing: 03.10.2025
(51) Int. Cl.: G06V 10/764, G06V 10/80, G06V 10/82, G06V 20/58

(54) **DETECTION PROGRAM, DETECTION METHOD, AND DETECTION DEVICE**

(30) Priority: 07.10.2024 IL 31616624
(71) Applicant: FUJITSU LIMITED, Kawasaki-shi, Kanagawa 211-8588 (JP); B.G. NEGEV TECHNOLOGIES AND APPLICATIONS LTD., at Ben-Gurion University, 841050 Beer Sheva (IL)
(72) Inventor: FELDMAN, Elad, 841050 Beer Sheva (IL); SHAMS, Jacob, 841050 Beer Sheva (IL); KODA, Satoru, Kawasaki-shi, 211-8588 (JP); MIRSKY, Yisroel, 841050 Beer Sheva (IL); SHABTAI, Asaf, 841050 Beer Sheva (IL); ELOVICI, Yuval, 841050 Beer Sheva (IL); NASSI, Ben, 841050 Beer Sheva (IL)
(74) Representative: Haseltine Lake Kempner LLP

(57) **Abstract**

A detection program causes a computer to execute a process includes acquiring an input image from a camera
acquiring a first detection result by inputting the input image to a first detection model that performs object detection acquiring, a plurality of detection results by inputting the input image to a plurality of detection models trained based on different training data sets with a parameter of the first detection model used as an initial value, and generating a detection result in which the first detection result and the detection results are combined.

## Description

### FIELD

The present invention relates to a detection program and the like.

### BACKGROUND

Conventional detection devices that detect objects from images captured by cameras include You Only Look Once (YOLO), Faster Region-based CNN (Faster R-CNN), Single Shot multibox Detector (SSD), and the like. Such detection devices are used in technical fields of automatic driving and the like.

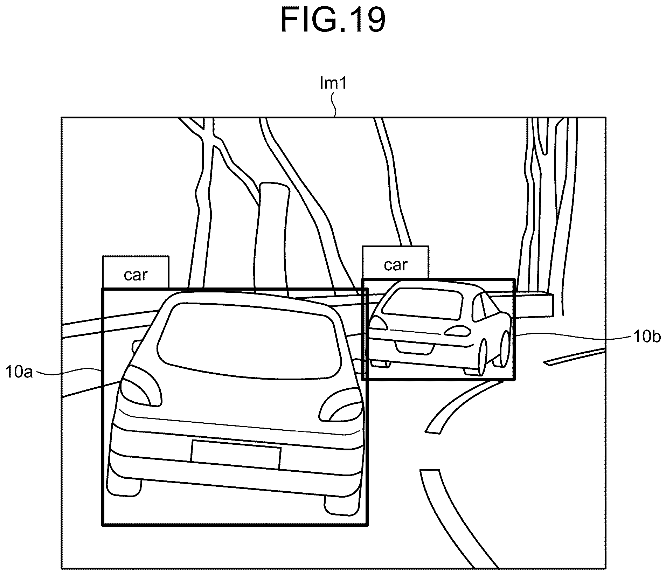

For example, when an image is input to the detection device, a "bounding box" and a "category" of an object present in image data (for example, vehicle) are specified. FIG. 19 is a drawing for describing a conventional art. In an example illustrated in FIG. 19, upon the input of image data Im1 to a detection device, a bounding box 10a and a bounding box 10b are specified. The category of the bounding boxes 10a and 10b is also specified as "car" by the detection device.

### Citation List

### Non Patent Literature

Non Patent Literature 1: Ben Nassi, and six others, "Phantom of the ADAS: Securing Advanced Driver-Assistance Systems from Split-Second Phantom Attacks" [online], [retrieved July 17, 2024], Internet <URL:https://dl.acm.org/doi/10.1145/3372297.3423359>.

However, the conventional art described above has a problem in that the detection rate of vehicles decreases for images captured under a predetermined condition.

In the following description, a vehicle equipped with a red or blue warning light is referred to as an "emergency vehicle". Emergency vehicles include police vehicles, fire engines, ambulances, and the like. A warning light emitting red or blue light (flashing in red or blue) is simply described as "warning light is on".

For example, the image captured under the predetermined condition described above is an image captured at night while the warning light of an emergency vehicle is on.

In one aspect, it is an object of the present invention to provide a computer program, a method, and a device capable of suppressing the decrease of the detection rate of vehicles for images captured under a predetermined SUMMARY

According to an aspect of an embodiment, a detection program causes a computer (500) to execute a process including acquiring an input image from a camera acquiring a first detection result by inputting the input image to a first detection model that performs object detection acquiring, a plurality of detection results by inputting the input image to a plurality of detection models trained based on different training data sets with a parameter of the first detection model used as an initial value, and generating a detection result in which the first detection result and the detection results are combined.

It is possible to suppress the decrease of the vehicle detection for the images captured under the predetermined condition.

### BRIEF DESCRIPTION OF DRAWINGS

FIG. 1 is a diagram (1) for describing a problem in a conventional art.
FIG. 2 is a diagram (2) for describing the problem in the conventional art.
FIG. 3 is a diagram for describing a Caracetamol framework.
FIG. 4 is a diagram illustrating one example of an MFA image.
FIG. 5 is a diagram illustrating one example of a GAN image.
FIG. 6 is a diagram for describing one example of an NMS algorithm.
FIG. 7 is a diagram illustrating one example of evaluation results.
FIG. 8 is a diagram for supplementarily describing a process in a training phase (2).
FIG. 9 is a functional block diagram illustrating a structure of a detection device according to an example.
FIG. 10 is a functional block diagram (1) illustrating a structure of a training device according to the present example.
FIG. 11 is a functional block diagram (2) illustrating a structure of the training device according to the present example.
FIG. 12 is a flowchart illustrating a processing procedure of the detection device according to the present example.
FIG. 13 is a flowchart (1) illustrating a processing procedure of the training device according to the present example.
FIG. 14 is a flowchart (2) illustrating the processing procedure of the training device according to the present example.
FIG. 15 is a diagram illustrating a structure example an automatic driving device.
FIG. 16 is a diagram illustrating one example of a hardware structure of a computer that achieves functions similar to those of the detection device according to the example.
FIG. 17 is a diagram (1) illustrating one example of a hardware structure of a computer that achieves functions similar to those of the training device according to the example.
FIG. 18 is a diagram (2) illustrating one example of a hardware structure of a computer that achieves functions similar to those of the training device according to the example.
FIG. 19 is a diagram for describing the conventional art.

### DESCRIPTION OF EMBODIMENTS

An example of a computer program, a method, and a device disclosed in the present application will be described below in detail based on drawings. This invention is not limited by this example.

### (Example)

Before the present example is described, a problem of a detection device in a conventional art is described more specifically.

As described above, when the detection device in the conventional art detects an object in an image captured by a camera at night while a warning light of an emergency vehicle is on, there is a problem in that the detection rate is low. Note that the image captured at night is an image whose average brightness is less than a threshold (for example, 60). In the following description, the image captured by the camera at night while the warning light of the emergency vehicle is on is referred to as "image captured under a predetermined condition".

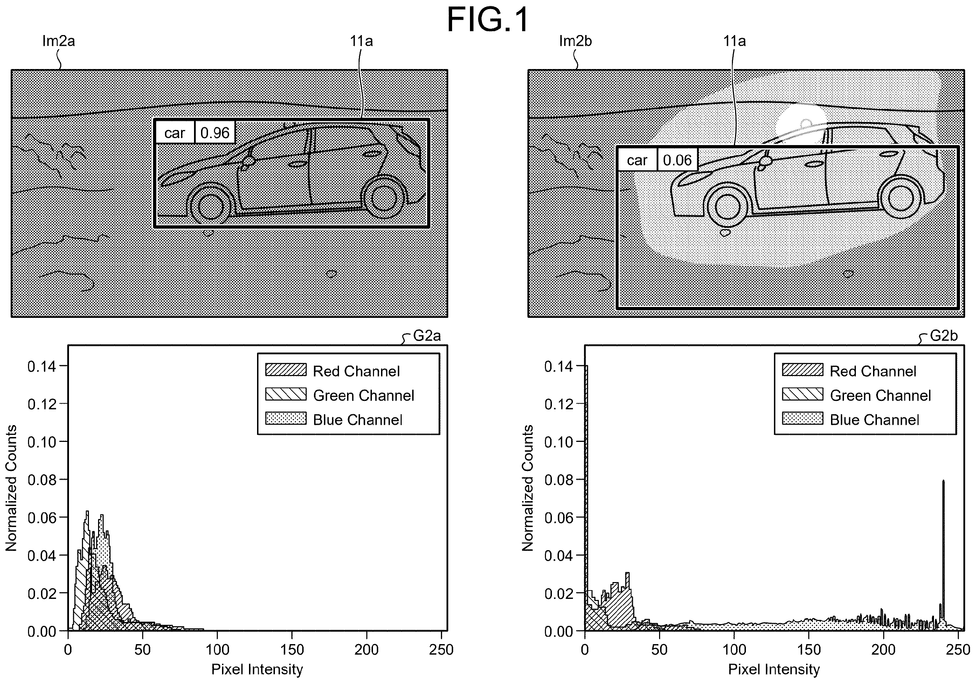

FIG. 1 is a diagram (1) for describing the problem in the conventional art. An image Im2a in FIG. 1 is an image of an emergency vehicle captured at night with its warning light off. A red green blue (RGB) histogram for the image Im2a is illustrated in a graph G2a. In the graph G2a, a horizontal axis corresponds to pixel intensity and a vertical axis corresponds to normalized counts.

When the image Im2a is input to the detection device in the conventional art, a bounding box 11a of the vehicle and the category "car" are specified. The confidence score by the detection device is 0.96.

On the other hand, an image Im2b in FIG. 1 is an image captured under the predetermined condition. The RGB histogram of the image Im2b is illustrated in a graph G2b. The description regarding the horizontal and vertical axes of the graph G2b is similar to that given for the graph G2a. Comparing the graph G2a and the graph G2b indicates that the distributions of a red channel, a green channel, and a blue channel are significantly different.

When the image Im2b is input to the detection device in the conventional art, a bounding box 11b of the vehicle and the category "car" are specified. The confidence score by the detection device is 0.06.

Here, the confidence score when the bounding box is specified upon the input of the image to the detection device indicates the probability that the detected object is actually present. To prevent false detection, if the confidence score is less than a preset threshold (for example, 0.7), a process of ignoring the detection result is performed and in this case, a vehicle detected from the image Im2b is ignored.

In other words, although the detection device in the conventional art can detect the vehicle from the image Im2a, it is not able to properly detect the vehicle included in the image Im2b, which is captured under the predetermined condition.

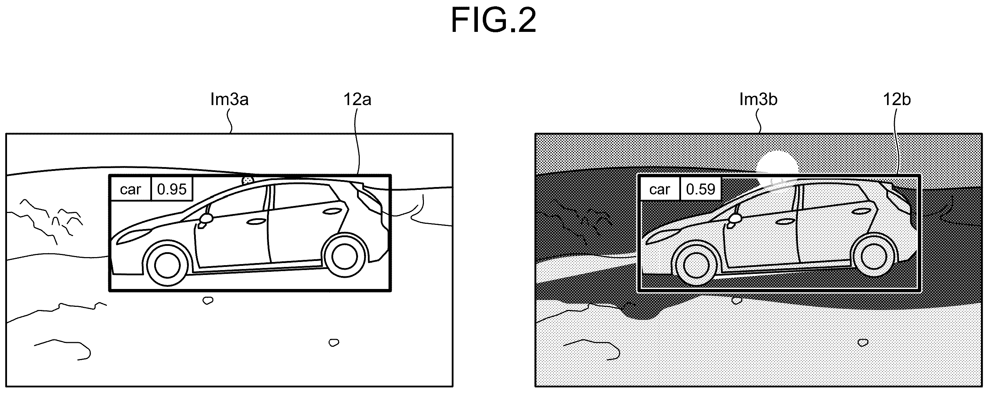

FIG. 2 is a diagram (2) for describing the problem in the conventional art. An image Im3a in FIG. 2 is an image of an emergency vehicle captured in daytime with its warning light on. When the image Im3a is input to the detection device in the conventional art, a bounding box 12a of the vehicle and the category "car" are specified. The confidence score by the detection device is 0.95.

On the other hand, an image Im3b in FIG. 2 is an image captured under the predetermined condition. When the image Im3b is input to the detection device in the conventional art, a bounding box 12b of the vehicle and the category "car" are specified. The confidence score by the detection device is 0.59.

In other words, although the detection device in the conventional art can detect the vehicle from the image Im3a, it is not able to properly detect the vehicle included in the image Im3b, which is captured under the predetermined condition.

Although the description is omitted herein, the inventors conducted verifications from various perspectives in addition to FIG. 1 and FIG. 2 and found that the detection rate by the detection device in the conventional art decreases for the images captured under the predetermined condition.

Next, the present example will be described. In the present example, a process in a detection phase and a process in a training phase are described separately. The detection phase is a phase in which an object is detected from an image. The training phase is a phase in which each model used in the detection phase is trained.

First, the process in the detection phase is described. In the present example, the detection device performs the process in the detection phase. In the following description, the detection device according to the present example will be referred to as a "detection device 100". The detection device 100 is connected to a camera in a wired or wireless manner. The camera captures video images and outputs video data to the detection device 100. The video data contains time-series frames. One frame is a single still image contained in the video data.

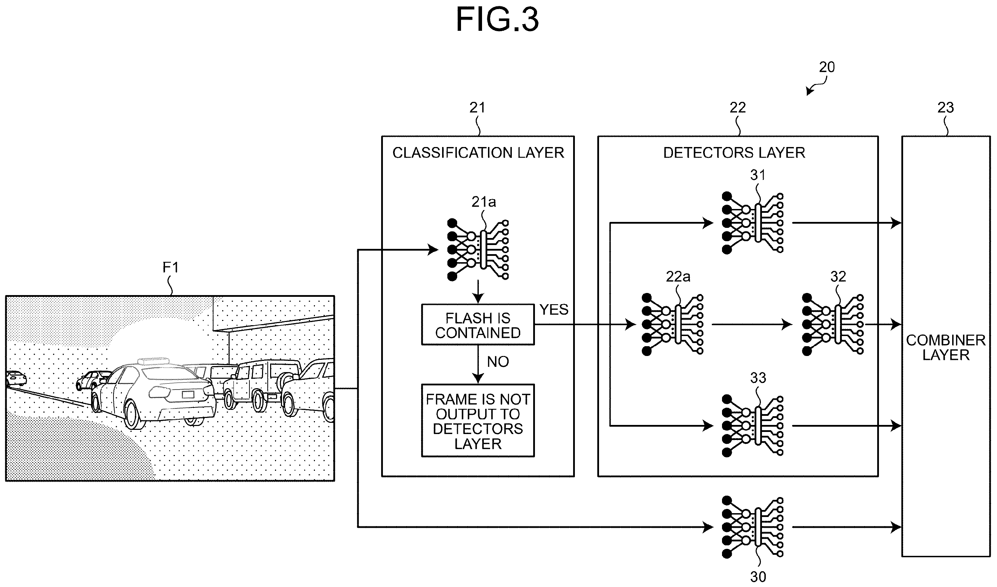

The detection device 100 uses the "Caracetamol framework" to detect objects from frames. FIG. 3 is a diagram for describing the Caracetamol framework. As illustrated in FIG. 3, a Caracetamol framework 20 includes a detection model 30, a classification layer 21, a detectors layer 22, and a combiner layer 23. The example illustrated in FIG. 3 will be described using a frame F1.

The detection model 30 is a model trained using a training data set similar to that of a detection model used in the detection device in the conventional art. The detection model 30 is a model of a neural network (NN), support-vector machine (SVM), or the like. For example, in the case of training the detection model 30, an explanatory variable is the frame (image) and objective variables are the coordinates of the bounding box and the class label (category). Detection models 31, 32, and 33 to be described below are the models of NN, SVM, or the like as well.

The detection model 30 outputs the detection results to the combiner layer 23 upon the input of the frame F1. For example, the detection results include information about the bounding box, confidence score, and category specified from the frame F1.

The classification layer 21 includes a classification model 21a. The classification model 21a is a model that specifies whether the frame F1 contains flash. The flash is the light of a warning light or the like. If the classification layer 21 has specified that the frame F1 contains the flash on the basis of the classification model 21a, the frame F1 is output to the detectors layer 22.

On the other hand, if the classification layer 21 has specified that the frame F1 does not contain the flash on the basis of the classification model 21a, the frame F1 is not output to the detectors layer 22. In this case, the frame F1 is processed by the detection model 30 only.

The detectors layer 22 includes a denoiser 22a and the detection models 31, 32, and 33. The frame F1 received from the classification layer 21 is input to each of the detection model 31, the denoiser 22a, and the detection model 33.

The denoiser 22a is a model that removes the flash contained in the frame F1 and outputs a "frame F1'" from which the flash has been removed, to the detection model 32.

The detection model 31 is a model that is fine-tuned using a first training data set with a parameter of the trained detection model 30 used as an initial value. The detection model 31 outputs the detection results to the combiner layer 23 upon the input of the frame F1. For example, the detection results of the detection model 31 include information about the bounding box, confidence score, and category specified from the frame F1.

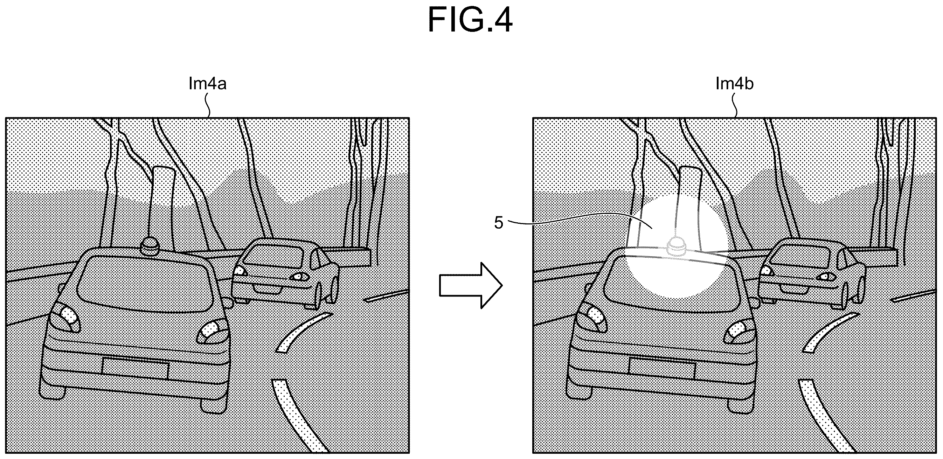

The first training data set includes a nighttime image in which pseudo flash is synthesized by a manual operation of a user (hereafter referred to as MFA image). For example, the user generates the MFA image using an image generator that synthesizes pseudo light that mimics the warning light. FIG. 4 is a diagram illustrating one example of the MFA image. In the example illustrated in FIG. 4, an MFA image Im4b is generated by synthesizing pseudo light 5 with a nighttime image Im4a.

The description of FIG. 3 is continued. The detection model 32 is a model that is fine-tuned using the first training data set with the parameter of the trained detection model 30 used as the initial value. The detection model 32 receives the input of the frame F1' from which the flash has been removed, from the denoiser 22a. The detection model 32 outputs the detection results to the combiner layer 23 upon the input of the frame F1'. For example, the detection results of the detection model 32 include information about the bounding box, confidence score, and category specified from the frame F1'.

The detection model 33 is a model that is fine-tuned using a second training data set with the parameter of the trained detection model 30 used as the initial value. The detection model 33 outputs the detection results to the combiner layer 23 upon the input of the frame F1. For example, the detection results of the detection model 33 include information about the bounding box, confidence score, and category specified from the frame F1.

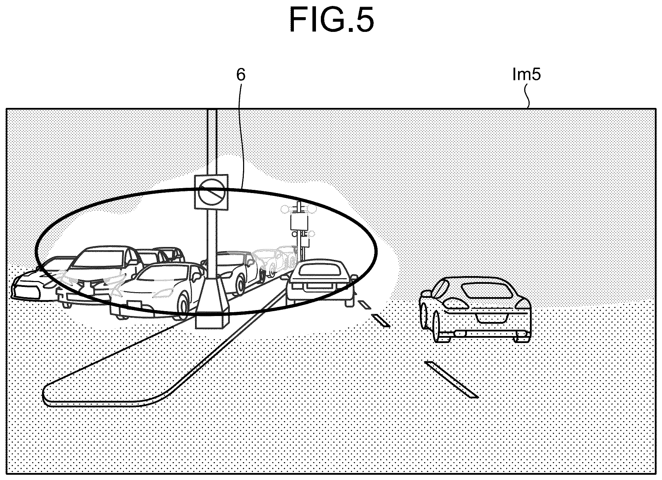

The second training data set includes nighttime images synthesized with pseudo flash using a trained cycle-consistent generative adversarial network (CycleGAN) (hereinafter "GAN images"). For example, a GAN image Im5 is generated by inputting the nighttime image into a generator of the trained CycleGAN. FIG. 5 is a diagram illustrating one example of the GAN image. In the example illustrated in FIG. 5, pseudo light 6 is automatically synthesized with the nighttime image. The pseudo light 6 is the light of a warning light or the like.

The description of FIG. 3 is continued. The combiner layer 23 combines the detection results of the detection models 30 to 33 and outputs the combined results. Each of the detection results of the detection models 30 to 33 includes information about the bounding box, confidence score, and category specified from the frame F1. The process of the combiner layer 23 differs depending on whether the frame F1 contains the flash.

First, the case in which the frame F1 contains the flash is described. If the frame F1 contains the flash, the classification layer 21 outputs the frame F1 to the detectors layer 22; therefore, the combiner layer 23 acquires the detection results of the detection models 30 to 33. The combiner layer 23 combines the detection results of the detection models 30 to 33 using a Non-Maximum Suppression (NMS) algorithm and outputs the combined results to a higher-level processing unit or the like.

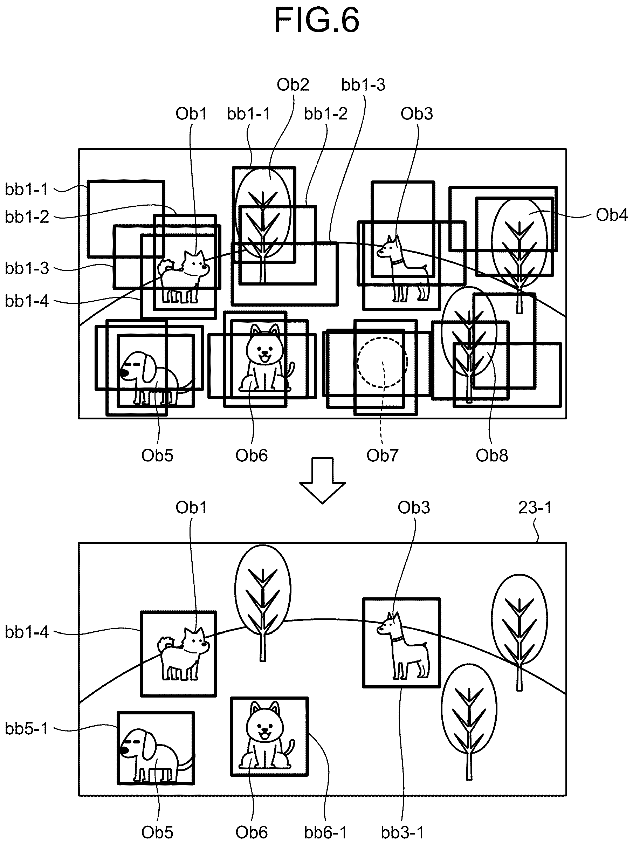

FIG. 6 is a diagram for describing one example of the NMS algorithm. First, bounding boxes bb1-1, bb1-2, bb1-3, and bb1-4 specified for an object Ob1 are used for the description. The bounding boxes bb1-1 to bb1-4 correspond to the detection results of the detection models 30 to 33.

From the bounding boxes bb1-1 to bb1-4, the combiner layer 23 specifies the bounding box whose confidence score is more than or equal to a threshold and whose confidence score is the maximum. For example, the bounding box whose confidence score is the maximum and more than or equal to the threshold is the bounding box bb1-4 in the description.

The combiner layer 23 deletes the bounding box bb1-1 if an overlapping part between the bounding box bb1-4 and the bounding box bb1-1 is more than or equal to a threshold (in the case of significant overlap). The combiner layer 23 deletes the bounding box bb1-2 if an overlapping part between the bounding box bb1-4 and the bounding box bb1-2 is more than or equal to the threshold (in the case of significant overlap). The combiner layer 23 deletes the bounding box bb1-3 if an overlapping part between the bounding box bb1-4 and the bounding box bb1-3 is more than or equal to the threshold (in the case of significant overlap). This leaves the bounding box bb1-4 and the confidence score and category of the bounding box bb1-4 as the detection results for the object Ob1.

Bounding boxes bb2-1, bb2-2, and bb2-3 specified for an object Ob2 are used for the description. The bounding boxes bb2-1 to bb2-3 correspond to the detection results of the detection models 30 to 32.

From the bounding boxes bb2-1 to bb2-3, the combiner layer 23 specifies the bounding box whose confidence score is more than or equal to the threshold and whose confidence score is the maximum. For example, if there are no bounding boxes whose confidence score is more than or equal to the threshold, the combiner layer 23 deletes the bounding boxes bb2-1 to bb2-3.

The combiner layer 23 repeats the above process for bounding boxes for other objects Ob3, Ob4, Ob5, Ob6, Ob7, and Ob8, so that a combined result 23-1 is obtained. Note that the bounding box for the object Ob7 is a false detection.

For example, in the combined result 23-1, the bounding box bb1-4 is set for the object Ob1. A bounding box bb3-1 is set for the object Ob3. A bounding box bb5-1 is set for the object Ob5. A bounding box bb6-1 is set for the object Ob6.

Subsequently, the case in which the frame F1 does not contain the flash is described. If the frame F1 does not contain the flash, the classification layer 21 does not output the frame F1 to the detectors layer 22, so that the combiner layer 23 acquires the detection result of the detection model 30. In this case, the combiner layer 23 outputs the detection result of the detection model 30 as the combined result.

Thus, the Caracetamol framework used by the detection device 100 has been described. As described above, if the frame contains the flash, the classification layer 21 inputs the frame to the detectors layer 22, and the combiner layer 23 combines the detection results of the detection models 30 to 31, so that the detection device 100 obtains the final detection results. This can suppress the decrease of the detection rate of the object for the images captured under the predetermined condition.

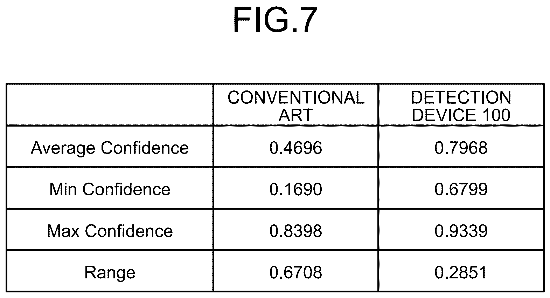

FIG. 7 is a diagram illustrating one example of evaluation results. Here, the case where the evaluation targets are the detection model in the conventional art (detection model 30) and the detection models 30 to 33 of the detection device 100 is described. Note that each detection model is YOLO.

Average Confidence, Min Confidence, Max Confidence, and Range are calculated based on the confidence score obtained by inputting a test data set into the detection model in the conventional art and the detection device 100. The test data set contains a plurality of frames captured under the predetermined condition. Average Confidence is the average value of the confidence scores. Min Confidence is the minimum value of the confidence scores. Max Confidence is the maximum value of the confidence scores. Range is the width from Min Confidence to Max Confidence.

For example, in the conventional art, Average Confidence is 0.4696, Min Confidence is 0.1690, Max Confidence is 0.8398, and Range is 0.6708. On the other hand, in the detection device 100, Average Confidence is 0.7968, Min Confidence is 0.6799, Max Confidence is 0.9339, and Range is 0.2851. In other words, comparison with the conventional art indicates that the detection device 100 can suppress the decrease of the detection rate of the object for the image captured under the predetermined condition.

Although the description is omitted here, the inventors employed Faster R-CNN, SSD, or the like as the detection model and conducted the evaluation. The comparison with the conventional art indicates that the detection device 100 can suppress the decrease of the detection rate of the object for the image captured under the predetermined condition, which is similar to the case of using YOLO.

The process in the detection phase has been described.

Next, the process in the training phase (1) is described. For example, the second training data set described above includes nighttime images synthesized with pseudo flash using the generator of the trained CycleGAN.

Regarding the process in the training phase (1), a training device that trains the CycleGAN is described. The training device according to the present example that trains the CycleGAN is referred to as a "training device 200". For example, the training device 200 performs a pre-process, a training process, and a generation process in sequence.

The pre-process to be performed by the training device 200 is described. The training device 200 extracts an image in the nighttime (hereinafter "nighttime image") from the images included in the data set prepared in advance. The data set prepared in advance is a BDD100K (Berkeley) data set or the like. For example, the training device 200 acquires the image from the data set and calculates the average brightness of the image. The training device 200 extracts a plurality of nighttime images by repeatedly performing the process of extracting the image whose average brightness is less than a threshold (for example, 60) as the nighttime image.

Subsequently, the training process to be performed by the training device 200 is described. The training device 200 acquires a plurality of images without flash from the data set prepared in advance and sets these images as a first group. The training device 200 acquires a plurality of images with flash from the data set prepared in advance and sets these images as a second group.

For example, the CycleGAN includes two generators and two discriminators. The two generators are a first generator and a second generator. The two discriminators are a first discriminator and a second discriminator.

The first generator generates the image without the flash from the image with the flash (second group of nighttime images). The second generator generates the image with the flash from the image without the flash (first group of nighttime images). The first discriminator is a discriminator that discriminates the image without the flash (first group of nighttime images) from the image without the flash generated by the first generator. The second discriminator is a discriminator that discriminates the image with the flash (second group of nighttime images) from the image with the flash generated by the second generator.

The training device 200 trains the first generator, the second generator, the first discriminator, and the second discriminator using the first group of images and the second group of images. The following is an example of training performed by the training device 200, but the training is not limited to this example. For example, the training can be performed using the technique described in the literature "J.-Y. Zhu, T. Park, P. Isola, and A. A. Efros, "Unpaired image-to-image translation using cycle-consistent adversarial networks," in Computer Vision (ICCV), 2017 IEEE International Conference on, 2017".

For example, the training device 200 inputs the first group of images with the flash to the first generator, thereby generating the images without the flash. The training device 200 inputs the second group of images without the flash to the second generator, thereby generating the images with the flash. The training device 200 evaluates each generation result using the first discriminator and the second discriminator, and calculates various kinds of losses (for example, opposing loss, cycle consistency loss, identity loss, and the like). The training device 200 updates the parameters of the first generator, the second generator, the first discriminator, and the second discriminator so that various losses are reduced.

The training device 200 trains the first generator, the second generator, the first discriminator, and the second discriminator by repeatedly performing the above process. The trained second generator serves as the generator that generates the GAN image of the second training data set described above. On the other hand, the trained first generator serves as the generator corresponding to the denoiser 22a described in FIG. 3.

Subsequently, the generation process to be performed by the training device 200 is described. The training device 200 generates a plurality of GAN images by inputting the nighttime images extracted in the pre-process to the trained second generator. The training device 200 generates a second training data set in which correct data is associated with the generated GAN images. For example, the training device 200 may receive the correct data corresponding to the GAN images from outside.

As described above, the training device 200 trains the first generator and the second generator using the images with the flash and the images without the flash. The training device 200 can generate the GAN images by inputting the nighttime images extracted from the data set prepared in advance to the second generator, and can then train the detection model 33 using the second training data set. By performing the above training, the first generator (denoiser 22a) can be generated.

The process in the training phase (1) has been described.

Next, the process in the training phase (2) is described. The training device that performs the process in the training phase (2) is referred to as a "training device 300". Regarding the training phase (2), the case in which the training device 300 trains the detection models 30, 31, 32, and 33 described in FIG. 3 is described.

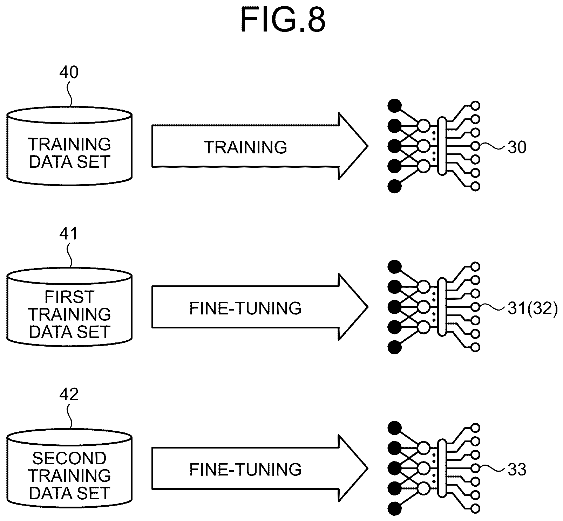

FIG. 8 is a diagram for supplementarily describing the process in the training phase (2). The training device 300 trains the detection model 30 using a training data set 40 prepared in advance. The training data set 40 includes a plurality of pieces of training data. The training data in the training data set 40 is a combination of input data and correct data. The input data is an image containing an object. The correct data is the coordinates of a bounding box and a class label (category).

The training device 300 trains the detection model 30 using the training data set 40 by repeatedly performing a process of updating the parameter of the detection model 30 so that output data when the input data is input to the detection model 30 approaches the correct data.

The training device 300 fine-tunes the detection model 31 (or detection model 32) using a first training data set 41 prepared in advance. The first training data set 41 includes a plurality of pieces of training data. The training data in the first training data set 41 is a combination of input data and correct data. The input data is an MFA image. The correct data is the coordinates of a bounding box and a class label (category).

For example, the training device 300 sets the parameter of the trained detection model 30 as the initial value of the parameter of the detection model 31. The training device 300 fine-tunes the detection model 31 using the first training data set 41 by repeatedly performing a process of updating the parameter of the detection model 31 so that output data when the input data is input to the detection model 31 approaches the correct data.

The training device 300 fine-tunes the detection model 33 using a second training data set 42 generated in the aforementioned training phase (1). The second training data set 42 includes a plurality of pieces of training data. The training data in the second training data set 42 is a combination of input data and correct data. The input data is a GAN image. The correct data is the coordinates of a bounding box and a class label (category).

For example, the training device 300 sets the parameter of the trained detection model 30 as the initial value of the parameter of the detection model 33. The training device 300 fine-tunes the detection model 33 using the second training data set 42 by repeatedly performing a process of updating the parameter of the detection model 33 so that output data when the input data is input to the detection model 33 approaches the correct data.

The detection models 30 to 33 trained in the training phase (2) are used by the detection device 100 in the detection phase described in FIG. 3.

The training phase (2) has been described. In the description given above, the training device 200 performs the training in the training phase (1) and the training device 300 performs the training in the training phase (2). However, the training devices 200 and 300 may be the same training device.

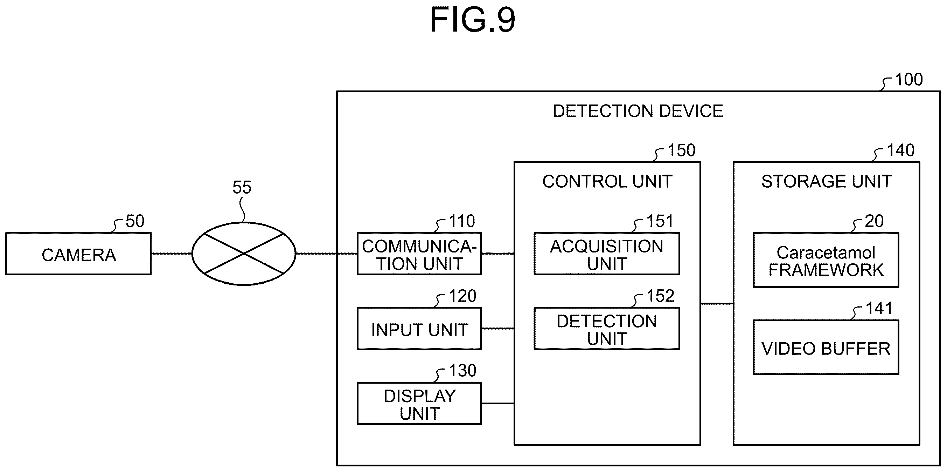

Next, a structure example of the aforementioned detection device 100 will be described. FIG. 9 is a functional block diagram illustrating a structure of the detection device according to the present example. As illustrated in FIG. 9, the detection device 100 is connected to a camera 50 via a network 55. The detection device 100 includes a communication unit 110, an input unit 120, a display unit 130, a storage unit 140, and a control unit 150.

The communication unit 110 performs data communication with the camera 50 via the network 55. The communication unit 110 may also receive a training data set 60 and the like from an external device. For example, the communication unit 110 receives video data from the camera 50.

The input unit 120 inputs various kinds of information to the control unit 150.

The display unit 130 displays information output from the control unit 150.

The storage unit 140 includes a Caracetamol framework 20 and a video buffer 141. The storage unit 140 is a memory or the like.

The Caracetamol framework 20 is the data of the Caracetamol framework 20 described in FIG. 3. The Caracetamol framework 20 includes the detection model 30, the classification layer 21, the detectors layer 22, and the combiner layer 23. The classification layer 21 includes the classification model 21a. The detectors layer 22 includes the denoiser 22a and the detection models 31, 32, and 33. The other description about the Caracetamol framework 20 is similar to that given in FIG. 3. The Caracetamol framework 20 is read out and executed by the control unit 150, which is described below.

The video buffer 141 is a buffer that holds the video data captured by the camera 50. The video data is time-series frames.

The control unit 150 includes an acquisition unit 151 and a detection unit 152. The control unit 150 is a central processing unit (CPU), a graphics processing unit (GPU), or the like.

The acquisition unit 151 acquires video data from the camera 50 via the communication unit 110. The acquisition unit 151 stores the acquired video data in the video buffer 141.

The detection unit 152 reads out the Caracetamol framework 20 and performs object detection using the Caracetamol framework 20. The detection unit 152 acquires frames from the video buffer 141 and inputs the acquired frames to the classification layer 21, thereby obtaining detection results that are combined results from the combiner layer 23. The detection unit 152 repeatedly performs the above process to obtain time-series detection results.

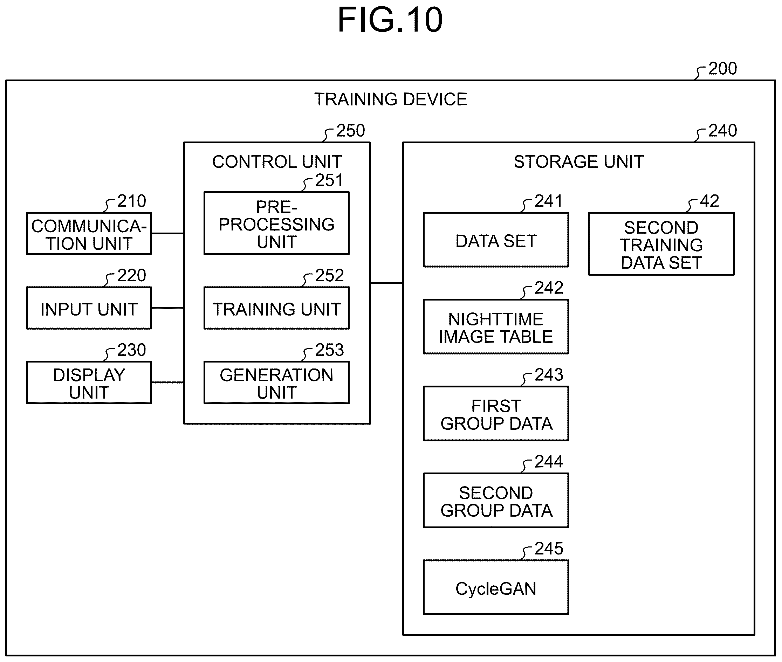

Next, a structure example of the training device 200 that performs the process in the training phase (1) is described. FIG. 10 is a functional block diagram (1) illustrating a structure of the training device according to the present example. As illustrated in FIG. 10, this training device 200 includes a communication unit 210, an input unit 220, a display unit 230, a storage unit 240, and a control unit 250.

The communication unit 210 performs data communication with an external device. The communication unit 110 may receive a data set 241, first group data 243, second group data 244, and the like from the external device.

The input unit 220 inputs various kinds of information to the control unit 250.

The display unit 230 displays information output from the control unit 250.

The storage unit 240 includes the second training data set 42, the data set 241, a nighttime image table 242, the first group data 243, the second group data 244, and a CycleGAN 245. The storage unit 240 is a memory or the like.

The second training data set 42 is a training data set generated by the control unit 250.

The data set 241 includes a plurality of images. Each image in the data set 241 contains a vehicle or the like. The data set 241 is the BDD100K (Berkeley) data set, or the like.

The nighttime image table 242 includes a plurality of nighttime images that are extracted from the data set 241 by the control unit 250.

The first group data 243 includes a plurality of images without the flash. For example, the images without the flash in the first group data 243 are acquired in advance from the BDD100K (Berkeley) data set or the like.

The second group data 244 includes a plurality of images with the flash. For example, the images with the flash in the second group data 244 are acquired in advance from a YouTube (registered trademark) data set or the like.

The CycleGAN 245 includes the first generator, the second generator, the first discriminator, and the second discriminator. The other description about the CycleGAN 245 is similar to that given above.

The control unit 250 includes a pre-processing unit 251, a training unit 252, and a generation unit 253. The control unit 250 is a CPU, GPU, or the like.

The pre-processing unit 251 extracts the nighttime image from the images included in the data set 241 and registers the extracted nighttime image in the nighttime image table 242. For example, the pre-processing unit 251 extracts an image whose average brightness is less than a threshold (for example, 60) as the nighttime image. The other description about the pre-processing unit 251 corresponds to the pre-process described in the training phase (1).

The training unit 252 trains the CycleGAN 245 using the first group data 243 and the second group data 244. The CycleGAN 245 includes the first generator, the second generator, the first discriminator, and the second discriminator.

For example, the training unit 252 inputs the image with the flash in the first group data 243 to the first generator, thereby generating the image without the flash. The training unit 252 inputs the image without the flash in the second group data 244 to the second generator, thereby generating the image with the flash. The training unit 252 evaluates each generation result using the first discriminator and the second discriminator, and calculates various kinds of losses (opposing loss, cycle consistency loss, identity loss, and the like). The training unit 252 updates the parameters of the first generator, the second generator, the first discriminator, and the second discriminator so that various losses are reduced.

The other description about the training unit 252 corresponds to the training process described in the training phase (1).

The generation unit 253 generates the images with the flash by inputting each nighttime image registered in the nighttime image table 242 to the trained CycleGAN 245 (second generator). The generated images with the flash are used as the input data for the second training data set. For example, the generation unit 253 may cause the display unit 230 to display the generated image, receive the correct data from the user, and register the pair of input data and correct data in the second training data set 42.

The other description about the generation unit 253 corresponds to the generation process described in the training phase (2).

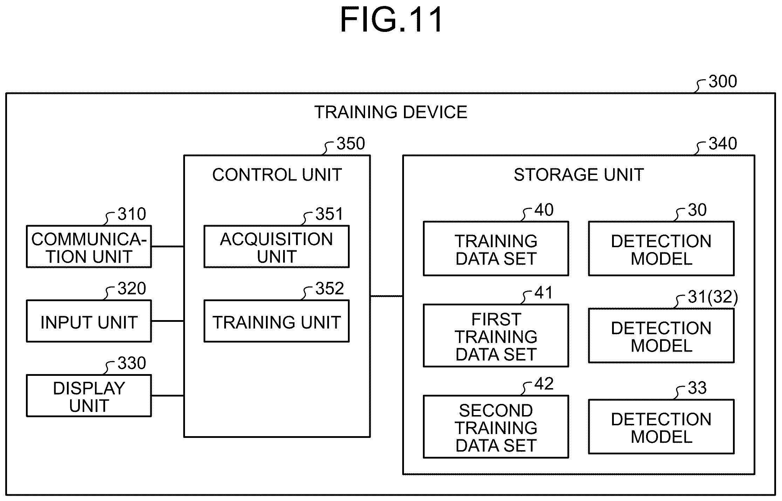

Next, a structure example of the training device 300 that performs the process in the training phase (2) is described. FIG. 11 is a functional block diagram (2) illustrating a structure of the training device according to the present example. As illustrated in FIG. 11, the present training device 300 includes a communication unit 310, an input unit 320, a display unit 330, a storage unit 340, and a control unit 350.

The communication unit 310 performs data communication with the detection device 100, the training device 200, and another external device. The communication unit 310 may receive the training data set 40 and the first training data set 41 from the external device. The communication unit 310 receives the second training data set 42 from the training device 200.

The input unit 320 inputs various kinds of information to the control unit 350.

The display unit 330 displays information output from the control unit 350.

The storage unit 340 includes the detection models 30, 31 (32), and 33, the training data set 40, the first training data set 41, and the second training data set 42. The storage unit 340 is a memory or the like.

The detection model 30 is a model that is trained by the control unit 350 using the training data set 40 similar to that of the detection model used in the detection device in the conventional art.

The detection models 31 and 32 are models that are fine-tuned by the control unit 350 using the first training data set 41 with the parameter of the trained detection model 30 used as the initial value.

The detection model 33 is a model that is fine-tuned by the control unit 350 using the second training data set 42 with the parameter of the trained detection model 30 used as the initial value.

The description about the training data set 40, the first training data set 41, and the second training data set 42 is similar to the description about the training data set 40, the first training data set 41, and the second training data set 42 given in FIG. 8.

The control unit 350 includes an acquisition unit 351 and a training unit 352. The control unit 350 is a CPU, GPU, or the like.

The acquisition unit 351 acquires the training data set 40 and the first training data set from the external device or the like via the communication unit 310 and stores these data sets in the storage unit 340. The acquisition unit 351 acquires the second training data set 42 from the training device 200 via the communication unit 310 and stores this data set in the storage unit 340.

The training unit 352 trains the detection models 30 to 33. First, the training unit 352 trains the detection model 30 using the training data set 40 by repeatedly performing the process of updating the parameter of the detection model 30 so that the output data when the input data is input to the detection model 30 approaches the correct data.

The detection model 30 trained in advance may be stored in the storage unit 340.

The training unit 352 sets the parameter of the trained detection model 30 as the initial value of the parameter of the detection model 31 (32). The training unit 352 fine-tunes the detection model 31 using the first training data set 41 by repeatedly performing a process of updating the parameter of the detection model 31 so that output data when the input data is input to the detection model 31 approaches the correct data.

The training unit 352 sets the parameter of the trained detection model 30 as the initial value of the parameter of the detection model 33. The training unit 352 fine-tunes the detection model 33 using the second training data set 42 by repeatedly performing a process of updating the parameter of the detection model 33 so that output data when the input data is input to the detection model 33 approaches the correct data.

The training device 300 outputs the trained detection models 30 to 33 to the detection device 100.

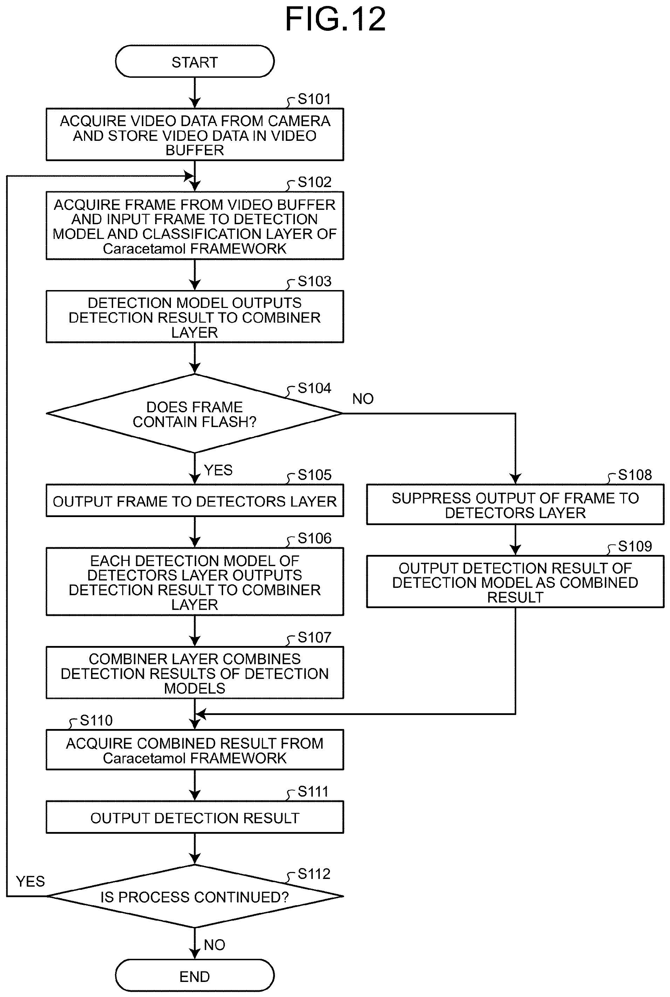

Next, one example of a processing procedure of the detection device 100 according to the present example is described. FIG. 12 is a flowchart illustrating the processing procedure of the detection device according to the present example. As illustrated in FIG. 12, the acquisition unit 151 of the detection device 100 acquires the video data from the camera 50 and stores the video data in the video buffer 141 (step S101).

The detection unit 152 of the detection device 100 acquires frames from the video buffer 141 and inputs the frames into the detection model 30 and the classification layer 21 of the Caracetamol framework 20 (step S102). The detection model 30 outputs the detection results to the combiner layer 23 (step S103).

If the frame contains the flash (Yes at step S104), the classification model 21a of the classification layer 21 outputs the frame to the detectors layer 22 (step S105).

Each of the detection models 31 to 33 in the detectors layer 22 outputs the detection result to the combiner layer 23 (step S106). The combiner layer 23 combines the detection results of the detection models 30 to 33 (step S107) and the process advances to step 110.

On the other hand, if the frame does not contain the flash at step S104 (No at step S104), the classification model 21a suppresses the output of the frame to the detectors layer 22 (step S108). The combiner layer 23 outputs the detection result of the detection model 30 as the combined result (step S109) and the process advances to step S110.

The detection unit 152 acquires the combined result from the Caracetamol framework 20 (step S110). The detection unit 152 outputs the combined result as the detection result (step S111). If the process is continued (Yes at step S112), the detection unit 152 carries out step S102. On the other hand, if the process is not continued (No at step S112), the detection unit 152 terminates the detection process.

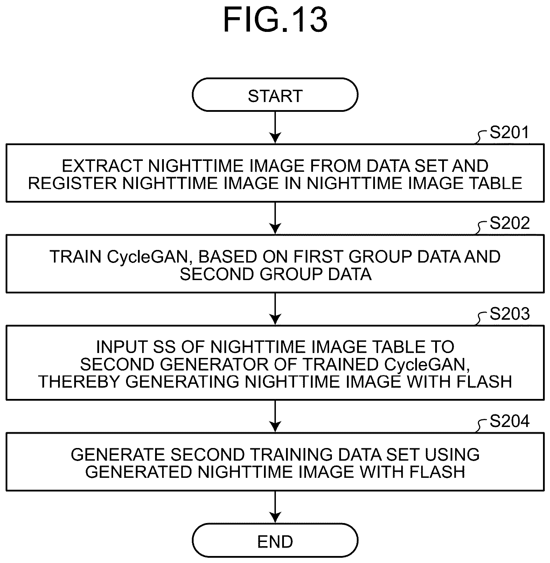

Next, one example of the processing procedure of the training device 200 according to the present example is described. FIG. 13 is a flowchart (1) illustrating a processing procedure of the training device according to the present example.

As illustrated in FIG. 13, the pre-processing unit 251 of the training device 200 extracts the nighttime image from the data set 241 and registers the nighttime image in the nighttime image table (step S201).

The training unit 252 of the training device 200 trains the CycleGAN 245 on the basis of the first group data 243 and the second group data 244 (step S202).

The generation unit 253 of the training device 200 generates the nighttime image with the flash by generating the nighttime image in the nighttime image table in the second generator of the trained CycleGAN 245 (step S203). The generation unit 253 generates the second training data set 42 using the generated nighttime images with the flash (step S204).

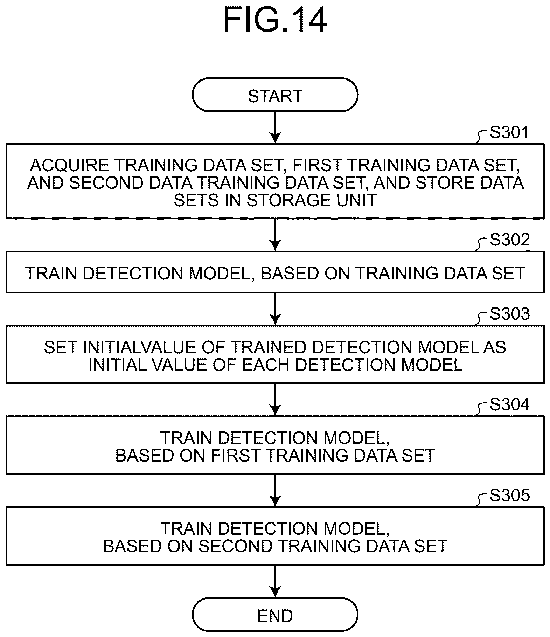

Next, one example of the processing procedure of the training device 300 according to the present example is described. FIG. 14 is a flowchart (2) illustrating a processing procedure of the training device according to the present example.

As illustrated in FIG. 14, the acquisition unit 351 of the training device 300 acquires the training data set 40, the first training data set 41, and the second training data set 42 from the external device and the training device 200, and stores these data sets in the storage unit (step S301).

The training unit 352 of the training device 300 trains the detection model 30 on the basis of the training data set 40 (step S302). The training unit 352 sets the initial value of the trained detection model 30 as the initial values of the detection models 31 to 33 (step S303).

The training unit 352 trains the detection model 31 (32) on the basis of the first training data set 41 (step S304). The training unit 352 trains the detection model 33 on the basis of the second training data set 42 (step S305).

Next, the effect of the detection device, and the training devices 200 and 300 according to the present example will be described. If the frame contains the flash, the classification layer 21 inputs the frame to the detectors layer 22, and the combiner layer 23 combines the detection results of the detection models 30 to 31, so that the detection device 100 obtains the final detection result. Thus, for example, as described in FIG. 7, it is possible to suppress the decrease of the detection rate of objects for the images captured under the predetermined condition.

The training device 200 trains the first generator and the second generator using the images with the flash and the images without the flash. The training device 200 can generate the GAN images by inputting the nighttime images extracted from the data set prepared in advance to the second generator, and can then train the detection model 33 using the second training data set. By performing the above training, the first generator (denoiser 22a) can be generated.

The training device 300 fine-tunes the detection model 31 (32) using the first training data set 41 with the parameter of the trained detection model 30 used as the initial value. The training device 300 fine-tunes the detection model 33 using the second training data set 42 with the parameter of the trained detection model 30 used as the initial value. By using each detection model trained by the training device 300, it is possible to improve the detection rate of the emergency vehicle for the images captured under the predetermined condition.

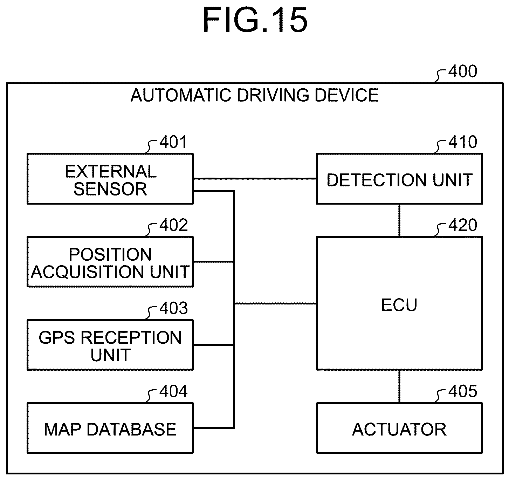

By the way, the detection device 100 described in the above example can also be mounted and used in an automatic driving device. FIG. 15 is a diagram illustrating a structure example of the automatic driving device.

An automatic driving device 400 illustrated in FIG. 15 is mounted on a vehicle such as a car. For example, the automatic driving device 400 includes an external sensor 401, a position acquisition unit 402, a global positioning system (GPS) reception unit 403, a map database 404, an actuator 405, a detection unit 410, and an electronic control unit (ECU) 420.

The external sensor 401 is a sensor that detects external circumstances, which correspond to peripheral information of the vehicle. The external sensor 401 is a camera, a radar, and a Laser Imaging Detection and Ranging (LIDER), or the like. The camera is a device that captures images of external circumstances of a vehicle. The external sensor 401 outputs video images (time-series frames) captured by the camera to the detection unit 410. The external sensor 401 outputs the detection results of the external circumstances to the ECU 420.

The position acquisition unit 402 communicates with an information center located outside the vehicle, acquires position data of another automatic driving vehicle and position data of a vehicle other than the aforementioned other automatic driving vehicle, and outputs the acquired position data to the ECU 420.

The GPS reception unit 403 measures the position of the vehicle (for example, latitude and longitude of the vehicle) by receiving signals from three or more GPS satellites, and outputs the measurement results to the ECU 420.

The map database 404 is a database including map data. The map data includes road position information, road geometry data, and intersection and junction position information.

The actuator 405 is a device that executes vehicle travel control on the basis of control signals output from the ECU 420. For example, the actuator 405 includes a throttle actuator, a brake actuator, a steering actuator, or the like.

The detection unit 410 executes the process corresponding to the detection device 100 (detection unit 152) described in FIG. 9. For example, the detection unit 410 acquires frames from the external sensor 401 and inputs the acquired frames to the classification layer 21, thereby obtaining the detection results that are combined results from the combiner layer 23. The detection unit 410 outputs the detection results to the ECU 420.

The ECU 420 controls the automatic driving of the vehicle. The ECU 420 calculates an appropriate and safe vehicle route on the basis of the information acquired from the external sensor 401, the position acquisition unit 402, the GPS reception unit 403, the map database 404, and the detection unit 410, and outputs the control signals to the actuator 405 in accordance with the calculated route.

By using the detection results acquired from the detection unit 410, the ECU 420 can safely support the automatic driving even when the camera captures the image including the vehicle with the warning light on.

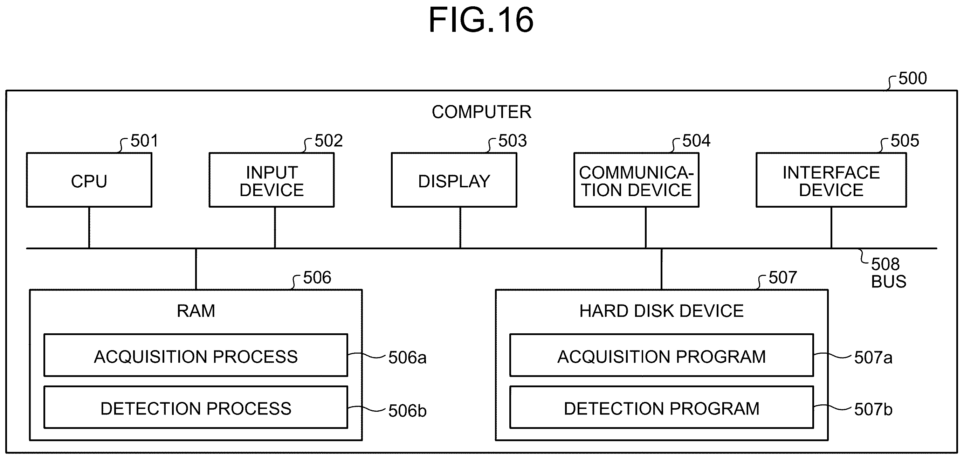

Next, one example of a hardware structure of a computer that achieves the functions similar to those of the aforementioned detection device 100 is described. FIG. 16 is a diagram illustrating one example of the hardware structure of the computer that achieves the functions similar to those of the detection device according to the example.

As illustrated in FIG. 16, a computer 500 includes a CPU 501 that performs various arithmetic processes, an input device 502 that receives data input from the user, and a display 503. The computer 500 also includes a communication device 504 that transmits and receives data to and from the camera, the external device, or the like via a wired or wireless network, and an interface device 505. The computer 500 also includes a RAM 506 for temporarily storing various kinds of information and a hard disk device 507. Each of the devices 501 to 507 is connected to a bus 508.

The hard disk device 507 includes an acquisition program 507a and a detection program 507b. The CPU 501 reads out each of the computer programs 507a and 507b and develops the computer program in the RAM 506.

The acquisition program 507a functions as an acquisition process 506a. The detection program 507b functions as a detection process 506b.

The process of the acquisition process 506a corresponds to the process of the acquisition unit 151. The process of the detection process 506b corresponds to the process of the detection unit 152.

Each of the computer programs 507a and 506b does not have to be stored in the hard disk device 507 from the beginning. For example, each computer program is stored in advance in a "portable physical medium" such as a flexible disk (FD), a CD-ROM, a DVD, a magneto-optical disk, or an IC card that is inserted into the computer 500. Then, the computer 500 may read out and execute each of the computer programs 507a and 507b.

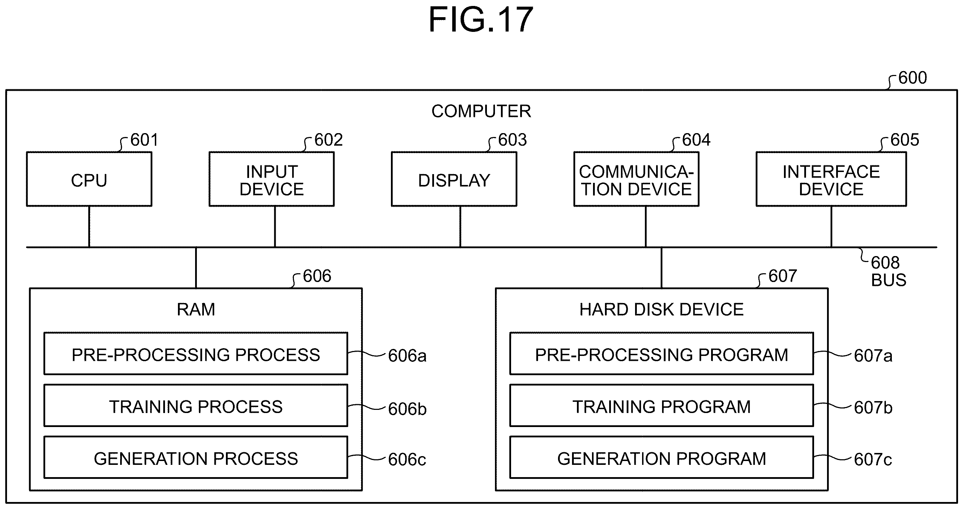

Next, one example of a hardware structure of a computer that achieves the functions similar to those of the aforementioned training device 200 is described. FIG. 17 is a diagram (1) illustrating one example of the hardware structure of the computer that achieves the functions similar to those of the training device according to the example.

As illustrated in FIG. 17, a computer 600 includes a CPU 601 that performs various arithmetic processes, an input device 602 that receives data input from the user, and a display 603. The computer 600 also includes a communication device 604 that transmits and receives data to and from the external device or the like via a wired or wireless network, and an interface device 605. The computer 600 also includes a RAM 606 for temporarily storing various kinds of information and a hard disk device 607. Each of the devices 601 to 607 is connected to a bus 608.

The hard disk device 607 includes a pre-processing program 607a, a training program 607b, and a generation program 607c. The CPU 601 reads out each of the computer programs 607a to 607c and develops the computer program in the RAM 606.

The pre-processing program 607a functions as a pre-processing process 606a. The training program 607b functions as a training process 606b. The generation program 607c functions as a generation process 606c.

The process of the pre-processing process 606a corresponds to the process of the pre-processing unit 251. The process of the training process 606b corresponds to the process of the training unit 252. The process of the generation process 606c corresponds to the process of the generation unit 253.

Each of the computer programs 607a to 606c does not have to be stored in the hard disk device 607 from the beginning. For example, each computer program is stored in advance in a "portable physical medium" such as a flexible disk (FD), a CD-ROM, a DVD, a magneto-optical disk, or an IC card that is inserted into the computer 600. The computer 600 may read out and execute each of the computer programs 607a to 607c.

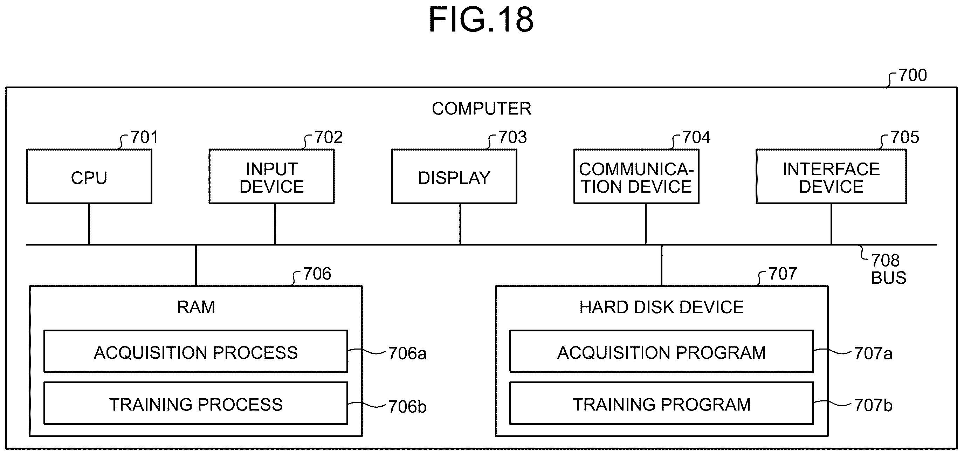

As illustrated in FIG. 18, a computer 700 includes a CPU 701 that performs various arithmetic processes, an input device 702 that receives data input from the user, and a display 703. The computer 700 also includes a communication device 704 that transmits and receives data to and from the external device or the like via a wired or wireless network, and an interface device 705. The computer 700 also includes a RAM 706 for temporarily storing various kinds of information and a hard disk device 707. Each of the devices 701 to 707 is connected to a bus 708.

The hard disk device 707 includes an acquisition program 707a and a training program 707b. The CPU 701 reads out each of the computer programs 707a to 707c and develops the computer program in the RAM 706.

The acquisition program 707a functions as an acquisition process 706a. The training program 707b functions as a training process 706b.

The process of the acquisition process 706a corresponds to the process of the acquisition unit 351. The process of the training process 706b corresponds to the process of the training unit 352.

Each of the computer programs 707a and 707c does not have to be stored in the hard disk device 707 from the beginning. For example, each computer program is stored in advance in a "portable physical medium" such as a flexible disk (FD), a CD-ROM, a DVD, a magneto-optical disk, or an IC card that is inserted into the computer 700. The computer 700 may read out and execute each of the computer programs 707a and 707c.

According to an aspects of an embodiment, a computer-readable storage medium may be provided. The computer-readable storage medium may be configured to comprise instructions, which when executed by a computer, cause a computer to carry out methods and/or processes described herein. The computer-readable storage medium may be configured to store thereon any computer program described herein.

All examples and conditional language recited herein are intended for pedagogical purposes of aiding the reader in understanding the invention and the concepts contributed by the inventors to further the art, and are not to be construed as limitations to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A detection program that causes a computer (500) to execute a process comprising:
acquiring an input image from a camera;
acquiring a first detection result by inputting the input image to a first detection model that performs object detection;
acquiring a plurality of detection results by inputting the input image to a plurality of detection models trained based on different training data sets with a parameter of the first detection model used as an initial value; and
generating a detection result in which the first detection result and the detection results are combined.

2. The detection program according to claim 1, further causing the computer (500) to perform the process comprising:
specifying whether the input image contains flash, and
when the input image contains the flash, acquiring the first detection result and the detection results by inputting the input image to the first detection model and the detection models.

3. The detection program according to claim 2, further causing the computer to perform the process comprising, when the input image does not contain the flash, acquiring the first detection result by inputting the input image to the first detection model, and outputting the first detection result as the combined detection result.

4. The detection program according to any of claims 1 to 3, wherein
the detection models include a second detection model, a third detection model, and a fourth detection model,
the second detection model and the third detection model are models trained using a first training data set in which an image containing flash generated by a manual operation is set with the parameter of the first detection model used as an initial value, and
the fourth detection model is a model trained using a second training data set in which an image containing flash generated by inputting an image to a generator included in a trained generative network is set with the parameter of the first detection model used as an initial value, and
the detection program further causes the computer to perform a process comprising:
acquiring a second detection result by inputting the input image to the second detection model;
acquiring a third detection result by inputting an image obtained by removing the flash from the input image to the third detection model; and
acquiring a fourth detection result by inputting the input image to the fourth detection model.

5. A detection method carried out by a computer (500), comprising:
acquiring an input image from a camera;
acquiring a first detection result by inputting the input image to a first detection model that performs object detection;
acquiring a plurality of detection results by inputting the input image to a plurality of detection models trained based on different training data sets with a parameter of the first detection model used as an initial value; and
generating a detection result in which the first detection result and the detection results are combined.

6. The detection method according to claim 5, further including specifying whether the input image contains flash, and
when the input image contains the flash, acquiring the first detection result and the detection results by inputting the input image to the first detection model and the detection models.

7. The detection method according to claim 6, further including when the input image does not contain the flash, acquiring the first detection result by inputting the input image to the first detection model, and outputting the first detection result as the combined detection result.

8. The detection method according to any of claims 5 to 7, wherein
the detection models include a second detection model, a third detection model, and a fourth detection model,
the second detection model and the third detection model are models trained using a first training data set in which an image containing flash generated by a manual operation is set with the parameter of the first detection model used as an initial value, and
the fourth detection model is a model trained using a second training data set in which an image containing flash generated by inputting an image to a generator included in a trained generative network is set with the parameter of the first detection model used as an initial value, and
the method further includes
acquiring a second detection result by inputting the input image to the second detection model;
acquiring a third detection result by inputting an image obtained by removing the flash from the input image to the third detection model; and
acquiring a fourth detection result by inputting the input image to the fourth detection model.

9. A detection device comprising a control unit (150) configured to:
acquire an input image from a camera;
acquire a first detection result by inputting the input image to a first detection model that performs object detection;
acquire a plurality of detection results by inputting the input image to a plurality of detection models trained based on different training data sets with a parameter of the first detection model used as an initial value; and
generate a detection result in which the first detection result and the detection results are combined.

10. The detection device according to claim 9, wherein the control unit (150) is further configured to specify whether the input image contains flash, and
when the input image contains the flash, acquire the first detection result and the detection results by inputting the input image to the first detection model and the detection models.

11. The detection device according to claim 10, wherein the control unit (150) is further configured to, when the input image does not contain the flash, acquire the first detection result by inputting the input image to the first detection model, and output the first detection result as the combined detection result.

12. The detection device according to any of claims 9 to 11, wherein
the detection models include a second detection model, a third detection model, and a fourth detection model,
the second detection model and the third detection model are models trained using a first training data set in which an image containing flash generated by a manual operation is set with the parameter of the first detection model used as an initial value, and
the fourth detection model is a model trained using a second training data set in which an image containing flash generated by inputting an image to a generator included in a trained generative network is set with the parameter of the first detection model used as an initial value, and
the control unit (150) is further configured to
acquire a second detection result by inputting the input image to the second detection model;
acquire a third detection result by inputting an image obtained by removing the flash from the input image to the third detection model; and
acquire a fourth detection result by inputting the input image to the fourth detection model.

13. A training program causing a computer (600) to execute a process comprising:
acquiring a plurality of first images containing flash of a vehicle and a plurality of second images not containing the flash; and
training a generative network including a generator and a discriminator, based on the first images and the second images.

14. The training program according to claim 13, further causing the computer (600) to perform the process comprising extracting a third image whose brightness is less than a threshold from a database storing a plurality of images therein, and generating an image containing flash by inputting the third image to the generator included in the trained generative network.

15. The training program according to claim 13 or claim 14, wherein the generative network is a generative adversarial network (GAN), and the process further includes training the GAN, based on the first images and the second images.
